# DEMANDE DE BREVET EUROPEEN

(11) **EP 2 180 654 A1**
(43) Date de publication de la demande: **28.04.2010**
(21) Numéro de dépôt: 08305723.2
(22) Date de dépôt: 24.10.2008
(51) Int. Cl.: H04L 29/06, H04L 9/32, H04W 12/10

(54) **Procédé de sécurisation des messages destinés à un terminal évolué dans une architecture distribuée**

(71) Demandeur: Gemalto SA, 92190 Meudon (FR)
(72) Inventeur: Faher, Mourad, 78160, MARLY LE ROI (FR)

(57) **Abrégé**

La présente invention décrit un procédé d'échange de messages sécurisé dans un système distribué. L'invention appuie sa sécurité sur l'échange de signatures des messages à interpréter, en lieu et place des messages eux-mêmes, ce qui permet de protéger le système vis-à-vis des attaques en confidentialité et en intégrité, sans alourdir le système en imposant une architecture lourde de PKI systématique.

## Description

L'invention concerne un procédé de sécurisation des messages destinés à un terminal évolué dans une architecture distribuée.
L'invention porte en particulier sur un moyen de s'assurer que le message, reçu par un dispositif est réellement celui qui lui a été initialement envoyé.

Les évolutions actuelles de la technologie facilitent grandement les échanges d'information. Ce phénomène permet, par exemple, de réaliser des systèmes dits « réparti » dans lesquels les différents acteurs d'un même système peuvent se trouver géographiquement séparés.
Cette évolution rend de plus en plus critique l'échange de données entre les acteurs. En effet cet accroissement des échanges de données à permis de développer tout un ensemble d'actions, appelées « attaques », qui peuvent être menées à l'encontre des données elles mêmes.
Ces attaques sont communément divisées en trois grandes familles :
Les attaques d'intégrité,
Les attaques de confidentialité
Les attaques de déni de service.

Les attaques d'intégrité visent à altérer le contenu d'une donnée, généralement à l'insu de son destinataire légitime. Ce genre d'attaque est typiquement menée afin de modifier des informations dans une donnée. Par exemple, lors d'un échange entre un terminal bancaire et le serveur de la banque, un attaquant peut avoir un fort intérêt à modifier le montant de la transaction. Dans un tout autre domaine, lors d'une authentification avec une carte d'identité électronique, l'attaquant peut avoir un intérêt à modifier certains champs, par exemple le nom dans le cas d'une carte d'identité volée.
Ces attaques sont généralement menées en interceptant l'échange de données entre l'émetteur légitime, et le destinataire légitime. Une fois le message intercepté, il est interprété afin d'en comprendre le contenu. Il est ensuite modifié, et enfin renvoyé au destinataire légitime, qui le recevra pensant qu'il vient de l'expéditeur légitime.
Cette attaque s'appuie sur un mécanisme appelé en anglais « man in the middle » qui permet a l'attaquant d'intercepter et de réémettre un message entre deux acteurs sans que ceux-ci ne s'aperçoivent de sa présence, l'attaquant se faisant passer pour un récepteur légitime, face à l'émetteur, et comme un émetteur légitime face au récepteur.

Les attaques de confidentialité sont menées afin de recueillir de l'information. Le but de l'attaquant est de lire le maximum de données échangées entre l'émetteur légitime, et le destinataire légitime. Selon les objectifs de l'attaque, celle-ci peut se mener avec un « man in the middle », comme dans la description de l'attaque précédente, ou bien sans.
Dans le cas ou un « man in the middle » est mis en place, une fois le message intercepté, il est interprété afin d'en comprendre le contenu. Il est ensuite renvoyé au destinataire légitime, qui le recevra pensant qu'il vient de l'expéditeur légitime. Dans ce mode d'implémentation d'une attaque en confidentialité les acteurs légitimes de l'échange de données ne sont pas informés de la fuite d'information.
Dans le cas ou un « man in the middle » n'est pas réalisé entre l'émetteur et le récepteur, l'attaquant va intercepter tout ou partie des informations échangées, et va en prendre connaissance. Cette attaque va rapidement être détectée car les informations interceptées sont perdues. Ainsi le récepteur ne reçoit pas les informations qui lui sont destinées. Le plus souvent c'est l'émetteur qui va détecter l'attaque car il n'aura pas, de la part du récepteur, la réaction qu'il attendait suite à son envoi d'informations.
Ces attaques sont généralement menées afin de découvrir des informations secrètes comme par exemple des codes secrets.
Les attaques en dénie de service sont un peu marginales au regard des deux précédentes, car leur but est d'interrompre le fonctionnement du système. En effet si les attaques ont toutes un objectif plus ou moins délictuel, un moyen simple de nuire aux acteurs d'un système est d'interrompre son fonctionnement. Ce genre d'attaque peut se faire par exemple en empêchant deux acteurs de communiquer, ce qui rend leur synergie nulle.
Une autre méthode peut consister en l'émission d'une grande quantité d'information à destination de tout ou partie des acteurs du système attaqué. Cette technique, aussi appelée « bombing » en anglais permet de surcharger les dispositifs électroniques partis du système, et par la même de les empêcher de dédier du temps et de la puissance de calcul pour faire les actions qui sont attendues d'eux. Une autre méthode plus complexe peut consister en la mise en place d'un « man in the middle » entre deux acteurs, et en l'altération de tout ou partie des informations échangées. Dans ce mode d'attaque, les messages seront bien envoyés et reçus, mais leur contenu sera tout ou partiellement incompréhensible, et donc inexploitable. Ce genre d'attaque plus difficile à mettre en oeuvre a généralement pour objectif de ralentir sa détection.
Ces problèmes sont particulièrement présents dans l'univers des dispositifs électroniques communicants évolués, tels que par exemple la téléphonie mobile, les terminaux de paiement en ligne, les agendas électroniques ou encore les terminaux électroniques d'authentification. Tous ces domaines ont en commun de constituer un système réparti, dont au moins un des acteurs est en contact direct avec l'utilisateur. Ces acteurs particuliers sont appelés généralement terminaux évolués. Les autres acteurs du système, en relation avec le ou les terminaux évolués sont eux appelés dispositifs clients.

Les terminaux évolués sont des dispositifs électroniques communicants ayant les moyens physiques d'entrer en contact avec l'utilisateur. Ces moyens peuvent appartenir à deux grandes catégories de moyens : les moyens d'entrée ou les moyen de sorties. Parmi les moyens de sortie, destinés à présenter une information à l'utilisateur on peut par exemple citer un écran permettant d'afficher des messages, ou bien un haut-parleur permettant de diffuser un message audio, ou tout autre moyen permettant d'informer l'utilisateur (diodes de couleurs, vibration, émissions olfactives ...).
Parmi les moyens d'entrée, destinés à collecter une information issue de l'utilisateur on peut citer par exemple un lecteur d'empreinte digitale, un micro, un clavier ou tout autre moyen physique permettant de capturer une information.

Les dispositifs clients sont des dispositifs électroniques qui hébergent un ensemble de fonctionnalités que nous regrouperons sous l'appellation générique de « application cliente ». Ces fonctionnalités peuvent être hébergées dans un dispositif électronique client dédié, voire dans un autre dispositif électronique, ou encore leurs fonctionnalités peuvent être réparties sur plusieurs dispositifs, auquel cas le dispositif client devient un dispositif virtuel, créé par le rassemblement de ces fonctionnalités. Ces dispositifs clients disposent entre autre de moyens leur permettant d'envoyer des messages au terminal évolué. Tout ou partie de ces messages étant destinés à être communiqués à l'utilisateur.
Selon la nature des messages, le terminal évolué peut être amené à réaliser une ou plusieurs actions avant d'ouvrir le canal de communication entre lui et l'utilisateur.
Un message du dispositif client peut par exemple comporter des informations que le terminal va recevoir, va compléter avec des informations qu'il va calculer localement, et afficher le tout sur son écran.

Dans certaines architectures distribuées, des solutions ont été développées à base de PKI (Public Key Infrastructure). Ces solutions s'appuient sur le fait que chacun des acteurs doit être en possession d'un couple clef publique / Clef privée. Par définition, les clefs publiques sont accessibles à « tout le monde », en tout cas elles ne sont pas confidentielles.
Ainsi, chaque message est envoyé chiffré avec la clef secrète de l'émetteur, et ensuite avec la clef publique du destinataire. Ainsi seul le destinataire légitime possède la clef secrète pour déchiffrer le message dans un premier temps. Ensuite, seule la clef publique de l'émetteur peut déchiffrer le message final, ce qui permet au destinataire de vérifier que le message a bien été chiffré par l'émetteur prévu.
Ces schémas apportent une solution aux problèmes d'attaques en confidentialité et en intégrité. Toutefois, cette solution nécessite une très grosse infrastructure en termes de PKI car un ou plusieurs serveurs sont nécessaires pour gérer les clefs publiques, et le nombre de couples de clefs devient problématique. De ce fait, cette solution ne peut être implémentée dans le contexte particulier des terminaux évolués, tels que certains téléphones portables, les agendas électroniques ou encore les terminaux de paiement.

La présente invention se propose de résoudre ces inconvénients en proposant une solution basée sur un encodage non réversible des messages destinés à un terminal évolué et ne nécessitant pas un couple de clef par acteur du système. Plus précisément la présente invention décrit un procédé d'échange de messages sécurisé dans un système distribué. L'invention appuie sa sécurité sur l'échange de signatures des messages à interpréter, en lieu et place des messages eux-mêmes, ce qui permet de protéger le système vis-à-vis des attaques en confidentialité et en intégrité, sans alourdir le système en imposant une architecture lourde de PKI systématique.

L'invention décrit un procédé de sécurisation de la transmission de messages entre un dispositif client et un terminal évolué capable de présenter tout ou partie des messages à l'utilisateur, et contenant au moins un message de référence, le terminal évolué et le dispositif client partageant une clé secrète, ainsi que l'identifiant unique du terminal évolué. Ce procédé comporte les étapes de
- génération par le dispositif client, d'une trame contenant le message à transmettre, l'identifiant unique du terminal évolué, et l'identifiant unique du dispositif client,
- application sur la trame d'une première fonction de hachage afin d'obtenir un haché de la trame
- chiffrement de l'identifiant unique du dispositif client avec l'aide de la clé secrète
- Transmission du haché de la trame, et de l'identifiant unique chiffré au terminal évolué
- déchiffrement de l'identifiant unique chiffré avec la clef secrète,
- génération d'une trame candidate avec l'identifiant unique déchiffré, l'identifiant unique dudit terminal évolué, et un des au moins un message de référence
- application sur la trame candidate d'une seconde fonction de hachage afin d'obtenir un haché de la trame candidate
- comparaison du haché de la trame candidate avec le haché de la trame.
- selon le résultat de la comparaison, exploitation du message de référence ou calcul d'une nouvelle trame avec un autre des au moins un message de référence.

Dans un mode de réalisation, la seconde fonction de hachage fait partie des au moins une fonction de hachage à la disposition du terminal évolué.

Le choix de la fonction de hachage peut se faire, selon les implémentations, en fonction de l'identifiant unique du dispositif client, au regard d'une table de correspondance.
L'identifiant de la première fonction de hachage peut être transmit par le dispositif client au terminal évolué. Cette transmission peut se faire chiffrée avec la clef secrète. Une fois déchiffré, cet identifiant peut être utilisé pour choisir la fonction de hachage à utiliser.
Dans un autre mode de réalisation, la trame candidate est successivement hachée avec les au moins une fonction de hachage à la disposition du terminal évolué, jusqu'à ce que la comparaison soit positive, ou jusqu'à ce que toutes les fonctions de hachage a disposition aient été essayées.

La trame peut comporter, en outre, un nombre aléatoire qui est transmis au terminal évolué chiffré avec la clef secrète, et également inséré dans la trame candidate.

Dans un mode de réalisation, un message dit message original est transmit au terminal évolué chiffré avec la clef secrète. Dans ce cas, le procédé comporte en outre les étapes de
- déchiffrement du message original avec la clef secrète
- insertion du message original dans la trame candidate en lieu et place du message de référence.
Le procédé peut alors comporter également une étape d'apprentissage au cours de laquelle le terminal évolué ajoute le message original à la liste des messages de référence.

D'autres caractéristiques et avantages de l'invention ressortiront clairement de la description qui en est faite ci-après, à titre indicatif et nullement limitatif, en référence au dessin annexé:

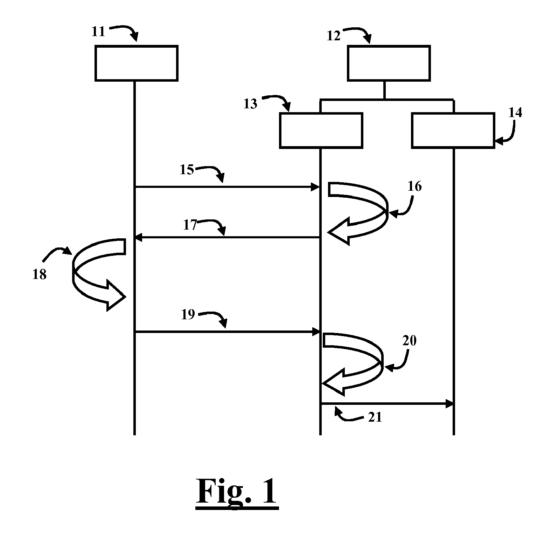

La figure 1 représente un diagramme de séquence illustrant les échanges entre les différents acteurs d'un système mettant en oeuvre l'invention.

Dans la figure 1, les deux acteurs majeurs du système sont le dispositif client 11, et le terminal évolué 12. Deux entités présentes dans le terminal évolué sont également illustrées, l'interface de communication 13, et les moyens de communication avec l'utilisateur 14. Ces moyens peuvent être par exemple un écran, un haut-parleur, ou bien tout moyen permettant d'entrer en communication avec l'utilisateur. Dans le cas ou le terminal évolué 12 aurait des contraintes particulières, par exemple de consommation d'énergie, ou de taille, les moyens de communication 14 peuvent par exemple être des diodes de couleur.

Dans l'exemple de la figure 1, une étape préalable à la mise en oeuvre de l'invention est décrite dans les étapes 15, 16 et 17.
En effet, dans cet exemple d'implémentation le dispositif client 11, envoie une requête 15 au terminal évolué 12. Cette requête est réceptionnée par l'interface de communication 13. Par cette requête particulière 15, le dispositif client initie une séquence d'introduction en vue d'échanger par la suite des messages.

Dans ce mode d'implémentation cette requête 15 contient une signature numérique vérifiable, propre au dispositif client 11. Cette signature peut par exemple avoir la forme d'un certificat électronique que nous appellerons CA_Certif. Les certificats électroniques on la particularité de fonctionner sur le modèle de la PKI (Public Key Infrastructure) ou clefs asymétriques. Ce modèle est basé sur un appairage des clefs, une publique, une privée. Les informations chiffrées par la clef privée ne peuvent être déchiffrées que par la clef publique, et les informations chiffrées par la clef publique ne peuvent être déchiffrées que par la clef privée. Ainsi un certificat électronique est généralement une donnée publique. Suivant la technique des clefs asymétriques, à chaque certificat électronique correspond une clef privée, qui doit être soigneusement protégée.
Un certificat numérique porte le plus souvent des informations sur son titulaire auxquelles s'ajoute la partie publique du couple de clefs.

A la réception de cette requête, le terminal évolué 12 crypte 16 son identifiant unique, appelé IFD_OID dans notre exemple, avec une clef secrète appelée Key. Dans un mode particulièrement avantageux cette clef est à usage unique, par exemple générée directement dans le terminal évolué. Cette clef Key est ensuite à son tour chiffrée 16 avec la clef publique PuK_CA du dispositif client, extraite du certificat reçu. Dans ces conditions, et compte tenue du modèle cryptographique, seul le titulaire de la clef privée correspondante est en mesure de déchiffrer la clef Key.
L'identifiant unique chiffré, et la clef chiffrée sont renvoyés 17 au dispositif client.

A ce stade du procédé, le dispositif client et le terminal évolué partagent une clef secrète Key, et l'identifiant unique du terminal évolué IFD_OID.
Dès lors, le dispositif client va entreprendre une phase de traitement 18. Dans un mode d'implémentation de l'invention, le dispositif électronique 11 va déchiffrer la clef Key en utilisant sa clef privée PrK_CA liée à la clef publique PuK_CA de son certificat CA_Certif. Ainsi une fois munie de la clef Key, il lui est possible de déchiffrer l'identifiant unique IFD_OID reçu.
Une fois muni de ces informations, le dispositif client, génère une trame qui contient le message MSG destiné au terminal évolué 12, ainsi que les identifiants uniques du dispositif client CA_OID et du terminal évolué IFD_OID.
Le fait d'associer les identifiants uniques au message permettra dans la suite du procédé, au terminal évolué de vérifier l'identité du dispositif client, et ainsi se prémunir d'un éventuel « man in the middle ».
Dans un mode particulièrement avantageux d'implémentation de l'invention cette trame comporte également un nombre aléatoire, destiné à empêcher un re-jeu ultérieur de cette trame.
Une fonction de hachage est ensuite appliquée à cette trame. Une fonction de hachage est une fonction cryptographique qui transforme une chaîne de caractères de taille quelconque en une chaîne de caractères de taille fixe et généralement inférieure. Cette fonction satisfait entre autres deux propriété :
- la fonction est non inversible : il est impossible pour une image de la fonction donnée de calculer l'antécédent associé.
- la fonction tend à être « sans collision » : il est difficile de trouver deux antécédents différents de la fonction ayant la même image. Cette caractéristique étant difficile à obtenir compte tenu de la réduction de taille, généralement obtenue par l'application de la fonction de hachage.

L'application d'une telle fonction de hachage permet de protéger l'envoie de message contre les attaques en confidentialité. En effet la propriété non inversible de la fonction de hachage nous garanti que, une personne en possession d'une ou plusieurs trames hachées ne peut pas remonter aux informations originales.
Dans cette phase de traitement 18, le dispositif client chiffre également son identifiant unique CA_OID avec la clef secrète Key. Le but est de transmettre de manière sécurisé l'identifiant unique CA_OID au terminal évolué.
Dans le cas ou un nombre aléatoire a été ajouté a la trame, il doit également être transmit de manière sécurisée au terminal évolué. Une solution avantageuse peut consister en l'association de l'identifiant unique CA_OID et du nombre aléatoire RND, et leur chiffrement commun avec la clef Key.
Le haché de la trame et le chiffré précédent sont envoyés 19 au terminal évolué.
A réception de ces informations, le terminal évolué entreprend une phase de traitement 20. Dans un mode de réalisation de l'invention, le terminal évolué décode le chiffré reçu avec la clef Key. Cela lui permet d'obtenir l'identifiant unique CA_OID du dispositif client. Dans le cas ou un nombre aléatoire RND est associé au procédé, il est également obtenu à ce moment là.
Le terminal évolué et le dispositif client sont donc tous deux en possession des informations suivantes :
- L'identifiant unique CA_OID
- L'identifiant unique IFD_OID
- La clef Key
- Et éventuellement le nombre RND.

Le terminal évolué va donc maintenant accéder à une zone mémoire dans laquelle il possède une liste de au moins un message MSG' potentiel. Ces messages sont en fait des messages pré-formatés que le terminal évolué peut être amené à traiter. Ces messages peuvent être stockés dans une base de données, un fichier, ou tout autre moyen de stockage dans une mémoire du terminal évolué. Dans un mode particulièrement avantageux d'implémentation de l'invention, ces messages MSG' seront enregistrés dans une mémoire non volatile du terminal évolué.
Un schéma envisageable peut consister en l'enregistrement des ces messages MSG' dans la mémoire d'un dispositif autre que le terminal évolué. Dans ce mode particulier d'implémentation le terminal doit donc établir une connexion avec ce dispositif et recueillir auprès de lui les messages MSG'.
Le terminal évolué 12 peut maintenant générer des trames, appelées trames candidates, avec un des messages MSG', et les identifiants uniques CA_OID et IFD_OID, et potentiellement le nombre aléatoire RND.
Le terminal évolué applique la même fonction de hachage que celle utilisée à l'étape 18, sur cette trame candidate.
Le résulté, le haché de la trame candidate est comparé au haché reçu du dispositif client 11. Si ces deux hachés sont identiques, cela signifie que le message MSG' est identique au message MSG utilisé par le dispositif client. Dans ce cas le message MSG' est traité par le terminal évolué, et envoyé 21, en tout ou partie, aux moyens de communication 14 du terminal évolué afin d'être communiqué à l'utilisateur.

Dans le cas ou le haché de la trame candidate et le haché de la trame ne correspondent pas, le terminal évolué essaye un autre message MSG', et ce tant qu'il y a des messages MSG' a tester.
Si aucun ne correspond, le terminal est en droit d'estimer que la trame reçue est corrompue, ou bien issue d'un dispositif client ne permettant pas la mise en relation.

Un mode d'implémentation prévoit que le message envoyé peut ne pas être connu du terminal évolué, et pour autant être parfaitement valide. Cela peut par exemple survenir si la liste des messages MSG' du terminal évolué n'est pas à jour.
Dans ce cas là, le message devra être, dans son intégralité envoyé par le dispositif client au terminal évolué, chiffré avec la clef Key.
Une possibilité peut consister à l'associer à l'identifiant unique CA_OID avant de les chiffrer tous deux avec la clef Key.
Dans ce cas le terminal évolué doit intégrer ce message MSG transmit à la trame candidate en lieu et place du message MSG'.
Comme décrit précédemment la trame candidate est hachée par une fonction de hachage et comparée, ainsi hachée, au haché de la trame, reçu lors de l'étape 19.
Dans le cas de corrélation entre ces deux hachés, il est particulièrement intéressant pour le terminal évolué d'enregistrer ce nouveau message MSG avec les messages MSG'.

Dans un mode particulièrement intéressant d'implémentation de l'invention, plusieurs fonctions de hachages peuvent être embarquées dans le terminal évolué.
Dans ce cas particulier plusieurs méthodes sont possibles pour choisir la fonction de hachage à utiliser.
Une première solution consiste en un envoi, depuis le dispositif client, d'un identifiant permettant de sélectionner la fonction à utiliser. Cet identifiant ALG_ID peut, dans un mode particulièrement avantageux, être associé à l'identifiant unique CA_OID. Ils seront conjointement chiffrés avec la clef Key, avant l'envoie schématisé par l'étape 19 de la figure 1.
Dans un autre mode d'implémentation selon l'invention, le terminal évolué peut rechercher, dans un élément stocké en mémoire, une relation entre l'identifiant unique CA_OID et une fonction de hachage. Une fois cette relation établie la fonction correspondante est utilisée pour hacher la trame client.
Une autre solution selon l'invention peut consister en un essai exhaustif des algorithmes à disposition. Dans ce cas là, la trame candidate est hachée avec la première fonction de hachage d'une liste interne. Une fois que tous les messages candidats MSG' sont testés sans que la comparaison du haché de la trame candidate et le haché de la trame reçue ne soit concordants, alors la liste des messages candidats MSG' sont réessayés en utilisant la fonction de hachage suivante. Et ainsi de suite pour chacune des fonctions de hachage, jusqu'à ce que les hachés de trames soient concordants, ou jusqu'à épuisement de la liste des fonctions de hachage disponibles.
Dans un mode particulier d'implémentation de l'invention, les fonctions de hachage à disposition sont hébergées par un dispositif électronique tiers, accessible par le terminal évolué. Ce dispositif électronique tiers peut avantageusement être un dispositif sécurisé de type carte a puce.

## Revendications

1. Procédé de sécurisation de la transmission de messages entre un dispositif client (11) et un terminal évolué (12) capable de présenter tout ou partie desdits messages à l'utilisateur, et contenant au moins un message de référence, ledit terminal évolué (12) et ledit dispositif client (11) partageant une clé secrète, ainsi que l'identifiant unique dudit terminal évolué, **caractérisé en ce que** ce procédé comporte les étapes de
- génération (18) par ledit dispositif client, d'une trame contenant le message à transmettre, ledit identifiant unique dudit terminal évolué (12), et l'identifiant unique dudit dispositif client (11),
- application (18) sur ladite trame d'une première fonction de hachage afin d'obtenir un haché de la trame
- chiffrement (18) dudit identifiant unique dudit dispositif client avec l'aide de ladite clé secrète
- Transmission (19) dudit haché de la trame, et dudit identifiant unique chiffré audit terminal évolué
- déchiffrement (20) dudit identifiant unique chiffré avec ladite clef secrète,
- génération (20) d'une trame candidate avec ledit identifiant unique déchiffré, ledit identifiant unique dudit terminal évolué, et un desdits au moins un message de référence
- application (20) sur ladite trame d'une seconde fonction de hachage afin d'obtenir un haché de la trame candidate
- comparaison (20) dudit haché de la trame candidate avec ledit haché de la trame.
- selon le résultat de ladite comparaison, exploitation (21) dudit message de référence ou calcul d'une nouvelle trame avec un autre desdits au moins un message de référence.

2. Procédé selon la revendication 1, **caractérisé en ce que** ladite seconde fonction de hachage fait partie des au moins une fonction de hachage à la disposition dudit terminal évolué.

3. Procédé selon la revendication 2 **caractérisé en ce que** le choix de la fonction de hachage est fait en fonction de l'identifiant unique dudit dispositif client, au regard d'une table de correspondance

4. Procédé selon la revendication 2 **caractérisé en ce que** l'identifiant de ladite première fonction de hachage est transmit par ledit dispositif client audit terminal évolué

5. procédé selon la revendication 4 **caractérisé en ce que** ledit l'identifiant de ladite première fonction de hachage est transmit chiffré avec ladite clef secrète.

6. Procédé selon l'une des revendications 4 ou 5, **caractérise en ce que** le choix de la fonction de hachage est fait en fonction dudit identifiant déchiffré de ladite première fonction de hachage

7. Procédé selon la revendication 2 **caractérisé en ce** ladite trame candidate est successivement hachée avec les au moins une fonction de hachage à la disposition dudit terminal évolué, jusqu'à ce que ladite comparaison soit positive, ou jusqu'à ce que toutes les dites fonctions de hachage a disposition aient été essayées.

8. Procédé selon l'une quelconque des revendications 1 à 7, **caractérisé en ce que** ladite trame comporte en outre, un nombre aléatoire qui est transmis audit terminal évolué chiffré avec ladite clef secrète, et également inséré dans ladite trame candidate.

9. Procédé selon l'une quelconque des revendications 1 à 8, **caractérisé en ce qu'**il comporte en outre un message dit message original, qui est transmis audit terminal évolué chiffré avec ladite clef secrète.

10. Procédé selon la revendication 9 **caractérisé en ce qu'**il comporte en outre les étapes de
- déchiffrement dudit message original avec ladite clef secrète
- insertion dudit message original dans ladite trame candidate en lieu et place dudit message de référence.

11. Procédé selon l'une des revendications 9 ou 10 **caractérisé en ce qu'**il comporte en outre une étape d'apprentissage au cours de laquelle ledit terminal évolué ajoute ledit message original à la liste desdits messages de référence.
